# EUROPEAN PATENT APPLICATION

(11) **EP 1 271 827 A1**
(43) Date of publication of application: **02.01.2003**
(21) Application number: 02250069.8
(22) Date of filing: 07.01.2002
(51) Int. Cl.: H04J 14/02

(54) **Wavelength-selective add/drop arrangement for optical communication systems**

(30) Priority: 29.06.2001 US 896248
(71) Applicant: LUCENT TECHNOLOGIES INC., Murray Hill, New Jersey 07974-0636 (US)
(72) Inventor: Caroli, Carl A., Locust, New Jersey 07760 (US); Doerr, Christopher Richard, Middletown, New Jersey 07748 (US); Feldman, Robert D., Middletown, New Jersey 07701 (US)
(74) Representative: Buckley, Christopher Simon Thirsk

(57) **Abstract**

A WDM input signal received at an add/drop node is coupled onto both a "drop" transmission path and a "through" transmission path within the node. Optical channels to be dropped are then processed within the "drop" path, such as by optical demultiplexing. Because a copy of the same WDM input signal is routed on the "through" path, a dynamically configurable and programmable wavelength blocker selectively blocks the optical channels that are being dropped from the WDM input signal and passes through those optical channels not being dropped onto the "through" path. In an "add" path within the node, optical channels are selectively added, such as by using optical multiplexing. Those optical channels from the multiplexed optical signal that are not designated for "add" (e.g., "unused" channels) are selectively blocked within the "add" transmission path. Optical channels from the "add" and "through" paths are then combined form a WDM output signal.

## Description

### FIELD OF THE INVENTION

The invention relates generally to optical communication systems employing wavelength division multiplexing (WDM) and, more particularly, to adding and dropping individual optical channels from a WDM signal in such optical communication systems.

### BACKGROUND OF THE INVENTION

Optical fiber is fast becoming a transmission medium of choice for many communication networks because of the speed and bandwidth advantages associated with optical transmission. In addition, wavelength division multiplexing (WDM) is being used to meet the increasing demands for more capacity in optical communication networks. As is well known, WDM combines many optical channels each at a different wavelength for simultaneous transmission as a composite optical signal in a single optical fiber. By using optical transmission and WDM in the backbone networks, the communications industry has made great strides in terms of offering greater capacity and transmission speeds in today's networks.

Management of this increased capacity in WDM systems, i.e., managing the communications traffic transported in many different optical channels, is an important aspect of any WDM-based communication network. For example, WDM systems, both long haul and metropolitan systems, typically include an add/drop capability whereby signals transported on the individual optical channels can be selectively added or dropped at various nodes in a network. Conventional approaches to optical add/drop systems are typically based on extracting the entire signal power for a selected wavelength at an add/drop node. Some examples of components used for optical add/drop include in-line arrayed waveguide grating routers (AWG), fiber Bragg gratings (FBG), or Mach-Zehnder (MZF) filters, to name a few.

Add/drop capability in existing systems is limited in several aspects. For example, the total number of channels that can be added or dropped between end terminals is generally limited. The availability of particular channels for add/drop at any given node is also typically limited, especially in those systems that employ a banding approach whereby groups of channels are allocated for add/drop at designated nodes, e.g., a first group of channels (channels 1-8) for add/drop at a first node, a second group of channels (channels 9-16) for add/drop at a second node, and so on. Accordingly, certain channels are therefore only "available" for add/drop at a particular node or nodes. Some systems do not allow an optical channel of a particular wavelength to be both added and dropped at the same node. Some systems also do not allow for wavelength reuse, e.g., where two separate circuits of communications traffic between different pairs of nodes can share the same wavelength in a network. In many WDM systems, reconfiguring add/drop assignments at a node, e.g., changing an optical channel from "drop" to "through" routing, requires on-site intervention by technicians. Consequently, all of these limitations contribute to a lesser capability to manage the bandwidth of a WDM system, e.g., to reuse wavelengths, provide selective and programmable add/drop at any given node, and so on.

These limitations in existing add/drop arrangements are generally attributable to the particular components being used as well as design limitations in configurations employing these components. For example, some of these limitations include insertion losses of commercially available components, polarization-dependent losses in the transmission path, power divergence in the optical channels of a WDM signal (e.g., different power levels in the optical channels), filter narrowing effects in a transmission path having a plurality of concatenated add/drop nodes (e.g., because filter characteristics are not perfectly matched from node to node), and channel spacing (e.g., wavelength separation) between the individual optical channels in a WDM signal, especially as the number of channels in a WDM system increases. Further complicating the design of an add/drop arrangement is the fact that solutions to some of these problems are at cross-purposes with each other. For example, equalization techniques to correct power divergence can lead to higher insertion losses and so on.

### SUMMARY OF THE INVENTION

A flexible, selective, and programmable add/drop solution capable of adding and dropping each of the optical channels in a dense WDM (DWDM) optical signal can be realized according to the principles of the invention in an add/drop node that employs selective wavelength blocking to facilitate routing in the "add", "drop", and "through" transmission paths within the node.

More specifically, a WDM input signal received at an add/drop node is coupled, e.g., using an optical signal tap, onto both a transmission path within the node designated for dropping optical channels and a transmission path within the node designated for "through" routing of optical channels, e.g., those not being dropped. Those optical channels to be dropped are then processed within the "drop" transmission path, such as by optical demultiplexing. Because a copy of the same WDM input signal is routed onto the "through" transmission path, a wavelength blocker is used in the "through" transmission path to selectively block the optical channels that are being dropped from the WDM input signal. In this manner, only optical channels not being dropped at the add/drop node are therefore passed on the "through" transmission path. In another transmission path within the node, optical channels can be selectively added, such as by using an optical multiplexer arrangement to supply one or more optical channels to be added. Those optical channels not being added for output from the node are selectively blocked within the add transmission path. As a result, the optical channels from the add transmission path are combined with the optical channels in the through transmission path to generate a WDM output signal for transmission from the add/drop node.

By incorporating selective wavelength blocking within the "add", "drop", and "through" paths according to the principles of the invention, a dynamically configurable and programmable add/drop capability is achieved which can be provisioned, locally or remotely, to accommodate changing add/drop requirements. Moreover, the use of wavelength blockers in an add/drop node provide an advantage over existing add/drop filtering arrangements that are particularly susceptible to the aforementioned filter narrowing effects, higher losses, cascadability limitations in terms of the number of concatenated add/drop nodes in a transmission path, and so on.

### BRIEF DESCRIPTION OF THE DRAWING

A more complete understanding of the present invention may be obtained from consideration of the following detailed description of the invention in conjunction with the drawing, with like elements referenced with like reference numerals, in which:
FIG. 1 shows a simplified network configuration in which the principles of the invention can be used;
FIG. 2 is a simplified block diagram of an add/drop arrangement according to one illustrative embodiment of the invention;
FIG. 3 is a simplified block diagram of an add/drop arrangement according to another illustrative embodiment of the invention;
FIG. 4 is a simplified block diagram of an add/drop arrangement according to another illustrative embodiment of the invention incorporating an express routing capability; and
FIG. 5 is a simplified block diagram of an add/drop arrangement according to another illustrative embodiment of the invention incorporating an interleaving capability to increase channel spacing for optical channels being dropped.

### DETAILED DESCRIPTION OF THE INVENTION

A brief review of some terminology commonly used when describing add/drop in the WDM context will be helpful to understanding terms used in the detailed description of the invention that follows. In WDM systems that transport a WDM signal having a plurality of optical channels of different wavelengths, add/drop generically refers to a capability whereby individual optical channels are removed from the WDM signal and/or added to the WDM signal. At a typical add/drop node, an optical channel of a particular wavelength in an incoming WDM signal can generally either be dropped from the WDM signal or passed through the add/drop node without being dropped. An optical channel of a particular wavelength can also be added to the WDM signal. Because most WDM systems today only allow a subset of the total number of channels to be dropped due to the aforementioned limitations, optical channels that are passed through a node without being dropped typically fall into one of two categories. In particular, an optical channel that could be dropped (e.g., allocated for drop) but is not selected for drop at a particular node is typically called a "through" channel. By contrast, an optical channel that cannot be added or dropped at a particular node, e.g., it is not within the subset or band of channels that can be dropped, is typically called an "express" channel. That is, the channel is expressly routed through the node bypassing all components in the node associated with the add/drop function.

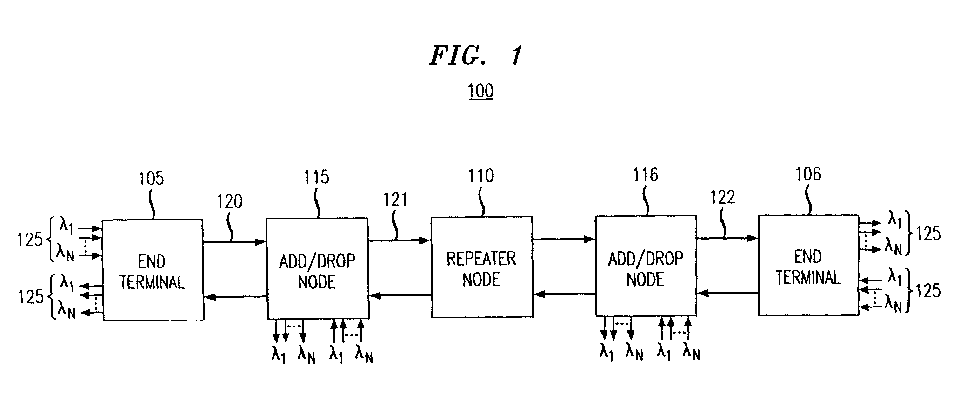

FIG. 1 shows a simplified network configuration in which the principles of the invention can be used. In particular, FIG. 1 shows a 2-fiber linear system 100 comprising a pair of end terminals 105 and 106 with one or more repeaters 110 and/or optical add/drop nodes 115-116 therebetween. As is well known, repeater 110 would be used, for example, to amplify the WDM signal being transported through the WDM system without providing an add/drop capability. As shown, system 100 shows two directions of communication.

In operation, N optical channels 125 (labeled as λ₁ to λ_{N}) are multiplexed to form WDM signal 120 at end terminal 105. WDM signal 120 is then routed via optical fiber to add/drop node 115 where N optical channels 125 can be dropped from WDM signal 120 and added to WDM signal 120. Add/drop node 115 then generates WDM signal 121 which comprises N optical channels 125 of the same wavelengths as WDM signal 120, but possibly carrying different communications traffic on one or more of the optical channels that were added or dropped from the original incoming WDM signal 120. From add/drop node 115, WDM signal 121 is then transported through repeater 110, where signal amplification occurs by well-known means, and then on to add/drop node 116 where add/drop processing similar to that previously described for add/drop node 115 occurs. Briefly, add/drop node 116 receives WDM signal 121, adds/drops selected ones of N optical channels 125, and outputs WDM signal 122. Again, WDM signal 122 includes N optical channels 125 of the same wavelengths as incoming WDM signal 121, but possibly carrying different communications traffic depending on the add/drop processing that occurred at add/drop node 116. WDM signal 122 is then transmitted to end terminal 106 where optical demultiplexing and other well-known processing occurs to generate N individual optical channels 125. The other direction of communication, from end terminal 106 to end terminal 105 will be similar to that previously described for communication from end terminal 105 to end terminal 106 and will not be repeated here for sake of brevity. It should be noted that system 100 is shown in simplified block diagram form and is only meant to represent one illustrative example. Accordingly, the principles of the invention are not meant to be limited in any manner by the exemplary configuration shown in FIG. 1.

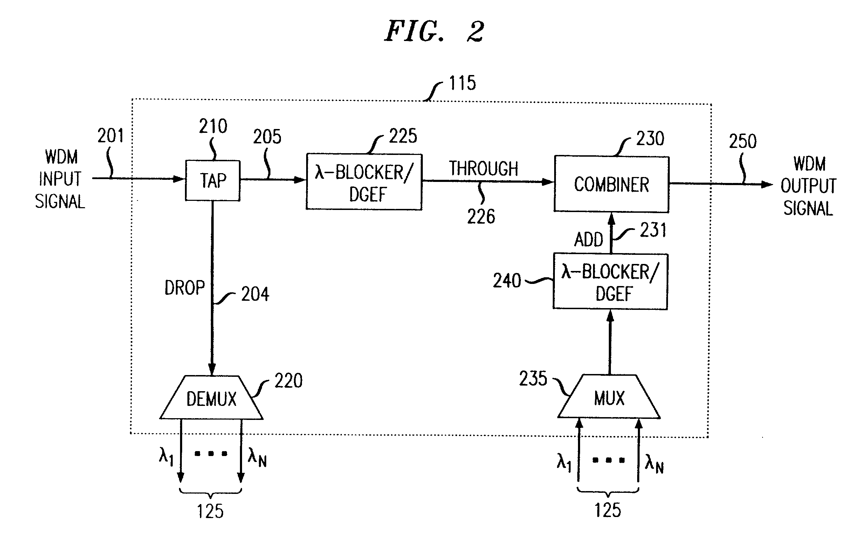

FIG. 2 shows a simplified block diagram of add/drop node 115 from FIG. 1 according to one illustrative embodiment of the invention. For simplicity of illustration and explanation, only one direction of communication over a single optical fiber is shown through add/drop node 115 although it is contemplated that add/drop node 115 may support another direction of communication over another optical fiber using a similar configuration as described below.

A WDM input signal 201 is received by add/drop node 115 and coupled into two different optical paths 204 and 205 by tap 210 so that each of paths 204 and 205 carries all of the optical channels in WDM input signal 201. By way of example, coupling can be accomplished using well-known techniques and commercially available devices, such as a so-called 90/10 tap coupler. As is well-known, a 90/10 tap coupler couples the WDM signal with 90% of the optical power into one path and the WDM signal with 10% of the optical power into the other path. In the example shown in FIG. 2, 10% of the optical power is routed into path 204 while 90% of the optical power is routed into path 205.

Optical demultiplexer 220 is coupled to path 204 for receiving and demultiplexing the WDM signal into its constituent optical channels 125, labeled here as λ₁ to λ_{N}. In this manner, any of optical channels 125 can be dropped at add/drop node 115. Other components needed for extracting the optical channels to be dropped are not shown here, e.g., filters, receivers, and so on, however, various well-known techniques and components are suitable for dropping selected ones of optical channels 125 from the demultiplexed WDM signal. The selective dropping of particular optical channels 125 can be controlled via standard control techniques used in WDM systems having add/drop elements, e.g., messaging and commands via system and board-level controllers, supervisory channels, and so on.

Many commercially available devices can be used to provide the demultiplexing function of optical demultiplexer 220. By way of example, an arrayed waveguide grating (AWG), commonly referred to as a waveguide grating router (WGR), is one such optical demultiplexer although there are numerous other devices that are suitable for extracting one or more optical channels of particular wavelengths from a WDM signal. For example only, other devices include, but are not limited to, thin film filters, grating-based devices, and so on.

Because a copy of WDM input signal 201 is also routed to path 205 for, "through" routing, the present invention can support a "drop" (with or without add) as well as a "drop and continue" operation. That is, an optical channel can be dropped via path 204 and blocked in path 205 if it was desirable to drop the channel without any "through" routing. In this manner, an optical channel of the same wavelength could be added back to WDM input signal 201, if desired, at node 115 as will be described below. Alternatively, a "drop and continue" operation could be supported whereby the optical channel being dropped via path 204 is also allowed to continue along path 205 without being blocked. Subsequent control would then be needed in this example to ensure that an optical channel of the same wavelength is not added to WDM input signal 201 thereby causing a collision.

As described and when appropriate, those optical channels that are dropped via path 204 can be blocked in path 205. This can be accomplished according to one illustrative embodiment using wavelength blocker 225. Responsive to control signals, commands, and so on from a control system or element, wavelength blocker 225 is a per-channel wavelength blocker that is configurable to selectively block certain optical channels that are being dropped via path 204 while passing all other optical channels. The optical channels provided as output from wavelength blocker 225 are routed onto path 226, labeled here as "through" path 226. In this manner, wavelength blocker 225 is used to control the selective routing of optical channels in "through" path 226 as a function of which optical channels are being dropped via path 204. In one illustrative embodiment, wavelength blocker 225 can be controlled by software to selectively block or pass each optical channel (by wavelength), thus adding a remote provisionability feature. In particular, the drop requirements for a particular node, such as add/drop node 115, can be provisioned remotely and dynamically in response to changing system requirements.

Various implementations are contemplated for wavelength blocker 225 and the selection of the appropriate device will depend on system design considerations that are within the skill in the art. By way of example, wavelength blocker 225 can be implemented with opto-mechanical shutters, liquid crystal technology, and so on. Some exemplary types of wavelength blockers are disclosed in U.S. Serial No. 09/809,124, filed on March 15, 2001, entitled "Planar Lightwave Wavelength Blocker" and U.S. Serial No. 09/809,126, filed on March 15, 2001, entitled "Planar Lightwave Wavelength Blocker Devices Using Micromachines", both of which are incorporated by reference in their entirety. Generally, wavelength blockers such as these and other equivalent devices are not as lossy as those devices used in prior art add/drop systems.

The optical channels passed by wavelength blocker 225 are routed on "through" path 226 to combiner 230 where they are combined with any optical channels being added via add path 231. More specifically, optical channels 125 to be added to the WDM signal at add/drop node 115 would be assigned wavelengths consistent with the existing wavelength assignments in the WDM signal. In this manner, wavelength re-use can be employed to provide a further advantage with respect to bandwidth management at the optical layer. Using a typical add/drop scenario as an example, an optical channel having wavelength λ₁, would be dropped at node 115 via drop path 204 and optical demultiplexer 220 as previously described. As such, the optical channel having wavelength λ₁ would be blocked by wavelength blocker 225 so that it would not be present on "through" path 226. An optical channel having the same wavelength λ₁ could then be added to the WDM signal via add path 231.

One way to add optical channels in this manner is according to the illustrative embodiment shown in FIG. 2. More specifically, optical multiplexer 235 is used to multiplex N optical channels 125 (e.g., having the same wavelength assignments as the WDM input signal 201) to form a composite WDM signal. Any of the N optical channels 125 can be the optical channel carrying communication traffic that is to be added to the WDM signal. However, because only one or more (but probably less than N) optical channels are actually carrying communication traffic to be added to the WDM signal, the WDM signal output by optical multiplexer 235 is coupled to wavelength blocker 240 which would operate similarly to wavelength blocker 225 as previously described. That is, wavelength blocker 240 would selectively pass or block individual optical channels such that only those optical channels that are actually to be added at add/drop node 115 would be allowed to pass via "add" path 231 to combiner 230. All other "unused" optical channels carried in add path 231 would be blocked by wavelength blocker 240 in order to prevent signal collisions with optical channels having the same wavelengths in "through" path 226. Accordingly, all optical channels being dropped or added at add/drop node 115 would be blocked by the respective wavelength blocker 225 and 240 in this illustrative embodiment.

Many commercially available devices can be used for optical multiplexer 235. By way of example, the aforementioned waveguide grating router (WGR) is one such optical multiplexer although there are numerous other devices that are suitable for adding one or more optical channels of particular wavelengths to a WDM signal. Another example is an optical combiner. Other alternatives for adding optical channels will also be apparent to those skilled in the art. For example, wavelength-selective components can be used to only add selected optical channels thus obviating the need for wavelength blocker 240.

In prior arrangements employing an optical multiplexer or similar device, any changes in the add/drop requirements, e.g., changing which channels are to be added, would require manual intervention, such as to change jumpers on the optical multiplexer, and so on. As such, adding optical channels was not programmable such as from a remote location, for example. By contrast and according to the principles of the invention, the add function is remotely programmable and controllable because the optical multiplexer is configured to multiplex all of the optical channels for routing to wavelength blocker 240 which is then used to pass or block out the appropriate channels, e.g., to pass only those optical channels that are to be added to the output signal. In this manner, the selective add function can be remotely programmed and controlled since wavelength blocker 240 is a remotely programmable device.

Combiner 230 then combines the optical channels in "through" path 226 with the individual optical channels being added from "add" path 231 to generate WDM output signal 250. Accordingly, WDM output signal includes a plurality of optical channels using the same wavelengths as in WDM input signal 201, but possibly carrying different communications traffic depending on whether individual optical channels were dropped and/or added at add/drop node 115. Various commercially available devices and techniques can be used to combine the optical channels being added via "add" path 231 with the optical channels being routed from "through" path 226.

By using selective wavelength blocking in conjunction with the illustrative routing configuration of the "drop", "add", and "through" paths 204, 231, and 226 respectively, add/drop node 115 therefore provides a selective and dynamically reconfigurable add/drop function that allows for remote provisioning in response to changing add/drop requirements. Moreover, wavelength blockers provide an advantage over existing add/drop filtering arrangements which are particularly susceptible to the aforementioned filter narrowing effects, higher losses, cascadability limitations in terms of the number of add/drop nodes that can be concatenated in a transmission path, and so on.

Control of wavelength blockers 225 and 240 to selectively block different optical channels depending on the particular add/drop requirements at a node can be implemented in a number of ways that will be apparent to one skilled in the art. In one illustrative embodiment, software-based control may be used to implement a channel assignment algorithm so that the wavelength blockers can be programmed to add and drop different optical channels depending on the particular add/drop assignments for the individual optical channels at any given time in a node.

As an example, when a request to add an optical channel of a particular wavelength (e.g., λᵢ) at a node is received, the status of that particular optical channel is checked at each of wavelength blockers 225 and 240 before an "add" association is entered for optical channel λᵢ at that node. For example, well-known optical signal monitoring could be used to detect the absence or presence of an optical signal at a particular wavelength in a transmission path. Common optical monitoring techniques could include the use of optical spectrum analyzers, photodetectors and associated circuitry, and so on. If either of wavelength blockers 225 or 240 is already configured or otherwise provisioned to pass optical channel λᵢ, as determined through an optical monitoring or other suitable technique, then the request to now add λᵢ would be denied in order to avoid a so-called "collision" whereby interference and other deleterious effects would occur. If the presence of the optical signal at λᵢ is not detected at the output of wavelength blockers 225 and 240, either because λᵢ was not originally present in WDM input signal 201 or because wavelength blockers 225 and 240 are already configured or otherwise provisioned to block λᵢ, then the request to now add λᵢ can be provisioned at the node. In this example, wavelength blocker 225 coupled to "through" path 226 would be set to block λᵢ while wavelength blocker 240 in "add" path 231 would be set to pass λᵢ.

Similarly, an optical channel cannot be reconfigured to "through" path 226 when that same optical channel having the same wavelength is being added via "add" path 231. As such, the programming of wavelength blockers 225 and 240 would have to be verified to check their current states with respect to the optical channel of interest. In another embodiment, control of the add/drop functions and, in particular, the states of wavelength blockers 225 and 240 can be coordinated among more than one add/drop node in a transmission path. In this manner, channel assignments and reconfigurations for add/drop requests can be coordinated among nodes to ensure that collisions do not occur not only within a particular node but also at a downstream node. For example, in addition to checking within a particular node before reconfiguring the wavelength blockers, software-based control can be used to facilitate the same types of checks at one or more downstream nodes so that an optical channel is not reconfigured to the "through" path of an upstream node when that optical channel having the same wavelength is being added at a downstream node without first being dropped. Other collision scenarios will be apparent to those skilled in the art as well as the control arrangements to facilitate channel assignments to avoid such collisions.

According to another aspect of the invention, an add/drop arrangement including wavelength blockers can provide another advantage over the conventional add/drop arrangements. In particular, a dynamic gain equalization function (DGEF) can be incorporated within wavelength blockers 225 and 240 to provide per-channel gain equalization so that all "through" and "add" channels are essentially at the same power level when outputted from the respective wavelength blockers 225 and 240. Dynamically adjusting gain of the optical channels therefore can effectively compensate for the aforementioned power divergence that may occur in the optical channels and which worsens as optical channels traverse multiple repeater (e.g., amplifier) and other add/drop nodes. For one exemplary dynamic gain equalization. approach, see U.S. Patent No. 6,212,315 issued April 3, 2001 to C. Doerr and entitled *"Channel Power Equalizer for a Wavelength Division Multiplexed System ".*

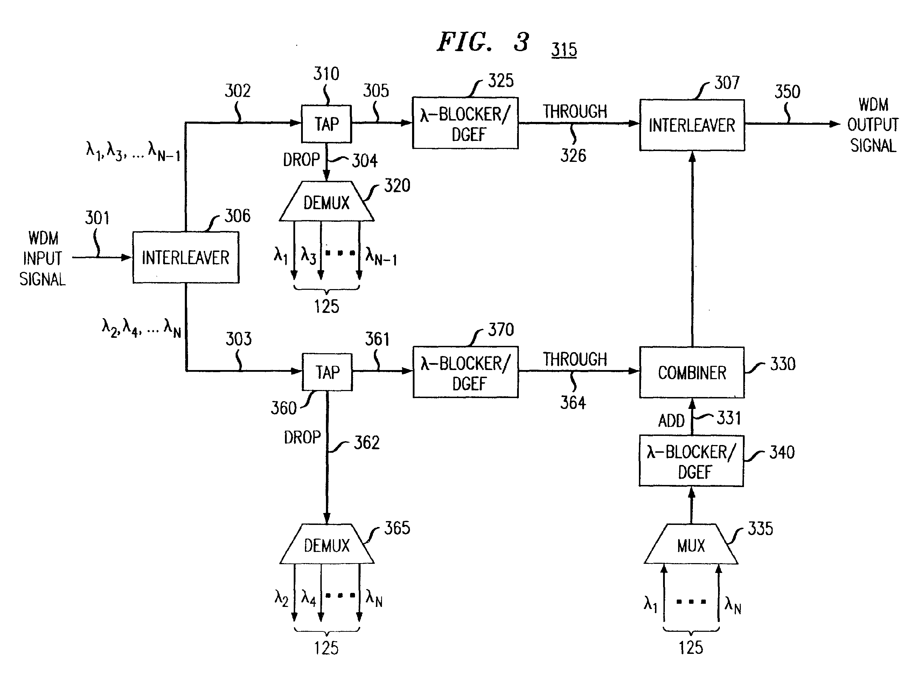

FIG. 3 shows another illustrative embodiment of an add/drop node 315 incorporating interleaving to increase channel spacing between adjacent optical channels thereby improving the add/drop performance at the node. More specifically, interleaving (and de-interleaving) of a WDM signal can be used to increase channel spacing to avoid the aforementioned problems of prior art arrangements and also to enable use of other commercially available devices for adding and dropping channels which might otherwise not be suitable because of channel spacing considerations. Again, system design considerations will likely dictate the actual type and configuration of components. Because node 315 includes many of the same components as node 115 (FIG. 2), which perform in the same or similar manner, only differences between the embodiments shown in FIGS. 2 and 3 will be described here for sake of brevity.

As shown, wavelength interleaver 306 separates (e.g., de-interleaves) individual optical channels within WDM input signal 301 according to a prescribed pattern or arrangement so that channel spacing between the optical channels is thereby increased. In one exemplary embodiment, interleaver 306 generates a first group of optical channels in path 302 and a second group of optical channels in path 303 such that all odd numbered optical channels (i.e., λ₁, λ₃,... λ_{N-1}) are on path 302 while all even numbered optical channels (i.e., λ₂, λ₄,... λ_{N}) are on path 303. In this manner, channel spacing between adjacent optical channels in WDM input signal 301 is increased, thereby minimizing other potential problems associated with the closer channel spacing such as insertion losses in downstream components, crosstalk, and so on. By way of example, an exemplary WDM system may carry 128 optical channels with channel spacing in the WDM input signal 301 being 50GHz. By separating at least every other channel into a different one of paths 302 and 303, the channel spacing for the WDM signal in each of paths 302 and 303 becomes 100GHz.

Interleavers or other devices having comparable function are commercially available and are contemplated for use in various embodiments of the invention. By way of example only, one such interleaver is a 50/100 GHz passive interleaver manufactured by companies such as JDS Uniphase and others. Other exemplary devices include so-called wavelength "slicers" manufactured by companies such as Chorum Technologies and others. Other alternative devices and arrangements will also be apparent to those skilled in the art. As such, the foregoing examples are meant to be illustrative only and not limiting in any way.

Tap 310, optical demultiplexer 320, and wavelength blocker 325 in path 302 are similar to the corresponding components in the embodiment shown in FIG. 2 and will not be described here in detail for sake of brevity. Briefly, these components are similarly used for dropping selected optical channels 125 via drop path 304 and for routing selected optical channels via "through" path 326. The only significant difference between this embodiment and that shown in FIG. 2 is that only a subset of the total number of optical channels from WDM input signal 301 are being processed for "drop" and "through" routing in path 302, e.g., odd numbered optical channels having wavelengths λ₁, λ₃,... λ_{N-1}. Similarly, tap 360, optical demultiplexer 365 and wavelength blocker 370 in path 303 perform a similar function as those same components in path 302 (as well as the corresponding components in FIG. 2), but only for another subset of the total number of optical channels from WDM input signal 301, e.g., even numbered optical channels having wavelengths λ₂, λ₄,... λ_{N}.

As with the corresponding components in the illustrative embodiment in FIG. 2, optical multiplexer 335, wavelength blocker 340 and combiner 330 in add path 331 of FIG. 3 are similarly used for adding optical channels to the WDM signal. As such, the basic operation of these components for adding the optical channels is the same and will not be repeated here for sake of brevity. In this embodiment, however, the optical channels to be added to the WDM signal, i.e., those that are added at optical multiplexer 335 and not blocked by wavelength blocker 340, are first combined in combiner 330 with the optical channels in "through" path 364.

Interleaver 307 is then used to interleave or otherwise combine the optical channels in through paths 326 with those optical channels generated as output from combiner 330. The optical channels generated as output from combiner 330 include the optical channels routed in "through" path 364 as well as the optical channels being added via "add" path 331 that are not blocked by wavelength blocker 340. In this manner, WDM output signal 350 is generated from interleaver 307 to include a combination of optical channels from WDM input signal 301 that are not dropped at node 315 along with optical channels being added at node 315. As previously described, various commercially available interleaver and combiner devices may be suitably used to perform the function of interleaver 307 and are therefore contemplated for use according to the principles of the invention. By way of example, a 50/100 GHz passive interleaver is one of several commercially available devices suitable for this purpose.

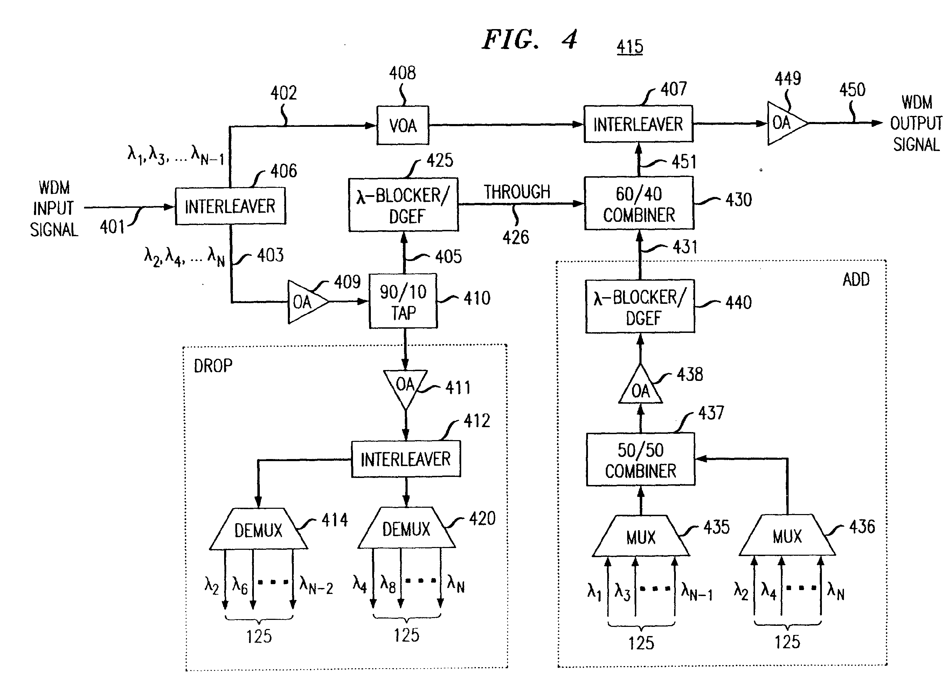

FIG. 4 shows another illustrative embodiment of an add/drop node 415 incorporating an express routing capability, optical amplification to compensate for losses, growth capability for add/drop, and interleaving to increase channel spacing between adjacent optical channels. As shown, WDM input signal 401 is supplied to interleaver 406 which performs a similar function as described in the embodiment shown in FIG. 3. In this illustrative embodiment, interleaver 406 separates individual optical channels within WDM input signal 401 according to a prescribed pattern or arrangement such that a first group of optical channels in path 402 include all odd numbered optical channels (i.e., λ₁, λ₃,... λ_{N-1}) while a second group of optical channels in path 403 include all even numbered optical channels (i.e., λ₂, λ₄,... λ_{N}). Following the previous embodiment, the optical channels in WDM input signal 401 could be spaced apart by 50 GHz and a 50/100 GHz interleaver could be used to provide a 100 GHz separation in the channels supplied as output from interleaver 406.

An express routing capability is provided according to the principles of the invention for the optical channels in path 402. In particular, these optical channels are routed directly through node 415 without passing through any components associated with dropping channels. In this example, the odd numbered optical channels (i.e., λ₁, λ₃,... λ_{N-1}) are expressly routed from path 402 through variable optical attenuator 408, which is a commercially available device useful for controlling the signal power level of the optical channels. For example, variable optical attenuator 408 can be used to maintain power levels of the "express" optical channels to be relatively equal to the levels of the "through" and "add" optical channels. These "express" optical channels are then supplied to interleaver 407.

The even numbered optical channels (i.e., λ₂, λ₄,... λ_{N}) in path 403 are first routed through optical amplifier 409 and then to a conventional 90/10 tap coupler 410 which operates similarly to taps 310 and 360 in FIG. 3. In the embodiment shown in FIG. 4, tap coupler 410 taps off 90% of the optical signal power of the incoming WDM signal (optical channels λ₂, λ₄,... λ_{N}) and routes these along path 405 to wavelength blocker 425. 10% of the optical signal power of the incoming WDM signal (optical channels λ₂, λ₄,... λ_{N}) is tapped off and routed via "drop" path 404 to optical amplifier 411.

Each of optical amplifiers 409 and 411 provide amplification of the optical signals to compensate for the losses that the signals will incur in the respective paths. For example, because only 10% of the optical signal power is being routed via "drop" path 404, optical amplifier 411 is useful for boosting the signal power of the optical channels to be dropped at node 415. Similarly, optical amplifier 409 is particularly useful for boosting the optical signal power of the optical channels that are being routed in "through" path 426 to compensate for loss on the "through" path 426 and also to balance optical signal power levels of the "through" optical channels with those optical channels being added at node 415 as will be described in further detail below. Other amplification schemes will be apparent to those skilled in the art and are a matter of design choice based on factors such as required signal levels, loss "budget" for the system, nodes, and so on.

An optional interleaver 412 can be used in "drop" path 404 to further increase the channel spacing of the optical channels being dropped. In the example shown in FIG. 4, interleaver 412 can be a 100/200 GHz interleaver wherein the incoming optical channels λ₂, λ₄,... λ_{N} are spaced apart by 100 GHz and each group of optical channels output from interleaver 412 has a channel spacing of 200 GHz. As shown, optical demultiplexer 420 can be used to separate optical channels λ₄, λ₈,... λ_{N} while optical demultiplexer 414 can be used to separate optical channels λ₂, λ₆,... λ_{N-2}. In this manner, the embodiment shown in FIG. 4 provides a growth capability in that a system may be initially configured without one of optical demultiplexers 414 or 420 and, as drop requirements change, the applicable optical demultiplexer can be added to accommodate additional drop requirements.

Similar to the previous embodiments, wavelength blocker (with optional DGEF) 425 is provisionable, e.g., by software-based or other control mechanisms, to selectively block or pass optical channels. In particular, wavelength blocker 425 would be provisioned to block wavelengths corresponding to those optical channels being dropped via path 404 as in the preceding embodiments. Those optical channels not blocked by wavelength blocker 425 would be routed along "through" path 426 to combiner 430 to be combined with the optical channels being added at node 415 as will be described in more detail below. The primary difference between the "express" optical channels in path 402 and the "through" optical channels in path 426 is that the optical channels in "through" path 426 can be dropped depending on the particular provisioning that is in effect at any given time whereas the "express" optical channels cannot be dropped at node 415.

Optical channels are added to the WDM signal at node 415 in a similar manner as described for the preceding embodiments. However, the illustrative embodiment shown in FIG. 4 provides an additional growth capability in that node 415 can be initially configured with a single optical multiplexer and additional optical multiplexers can be added as the "add" requirements change for node 415. In this example, optical multiplexer 435 is shown to process optical channels having wavelengths λ₁, λ₃,... λ_{N-1}, while optical multiplexer 436 is shown to process optical channels having wavelengths λ₂, λ₄,... λ_{N}. It should be appreciated by those skilled in the art that the particular wavelength assignments for the one or more optical multiplexers is a matter of design choice. For example, it may be desirable and practical for each optical multiplexer to handle a band of optical channels of adjacent wavelengths, e.g., λ₁, λ₂,... λᵢ in optical multiplexer 435 and λᵢ₊₁, λᵢ₊₂,... λ_{N} in optical multiplexer 436, and so on. Factors such as channel spacing, the total number of optical channels (N), and other considerations will dictate particular configurations and component selection for adding the optical channels. Other modifications to the particular scheme for adding optical channels, which are consistent with the teachings herein, will also be apparent to those skilled in the art and are contemplated by the teachings herein. For example, other components for combining optical channels may be used instead of optical multiplexers.

Combiner 437 is used to combine the optical channels supplied by each of optical multiplexers 435 and 436. By way of example, combiner 437 can be a 50/50 combiner that combines an equal amount of signal power from each of the multiplexed signals. Optical amplifier 438 is then used to amplify the optical channels supplied by combiner 437 and the amplified signal is then passed to wavelength blocker 440, which operates in a similar manner as described in the preceding embodiments. For example, wavelength blocker 440 is configured or otherwise provisioned, e.g., via remote software-based control, to block those wavelengths corresponding to optical channels not being added at node 415 while passing the wavelengths of those optical channels being added at node 415. Wavelength blocker 440 provides an added benefit by minimizing amplified spontaneous emission (ASE) noise that may be generated by optical amplifier 438. Again, wavelength blocker 440 may also include a dynamic gain equalization function (DGEF) to provide a per-channel gain equalization capability so that the power of the optical channels being added can be maintained at a level approximately equal to the average of the power of the optical channels in "through" path 426.

Combiner 430 can be used to combine the selected optical channels being added via "add" path 431 to the optical channels from "through" path 426. In one illustrative embodiment, a well-known 60/40 combiner can be used so that the combined signal comprises 60% of the power of the optical channels from "through" path 426 and 40% of the power of the optical channels from "add" path 431. As such, the "through" optical channels would be slightly favored in this particular scenario. The incorporation of amplification within node 415 and the selection of appropriate power splitting and combining ratios for the various taps, combiners, multiplexers, demultiplexers, and interleavers will of course be a matter of design choice based on factors such as loss budget and so on.

The combined multi-wavelength signal is then routed via path 451 to interleaver 407 where it is interleaved with the multi-wavelength signal that comprises those optical channels expressly routed from path 402, e.g., optical channels having λ₁, λ₃,... λ_{N-1} in this exemplary embodiment. The interleaved signal is then amplified (optionally) by optical amplifier 449 for transmission as WDM output signal 450 to the next node in the network.

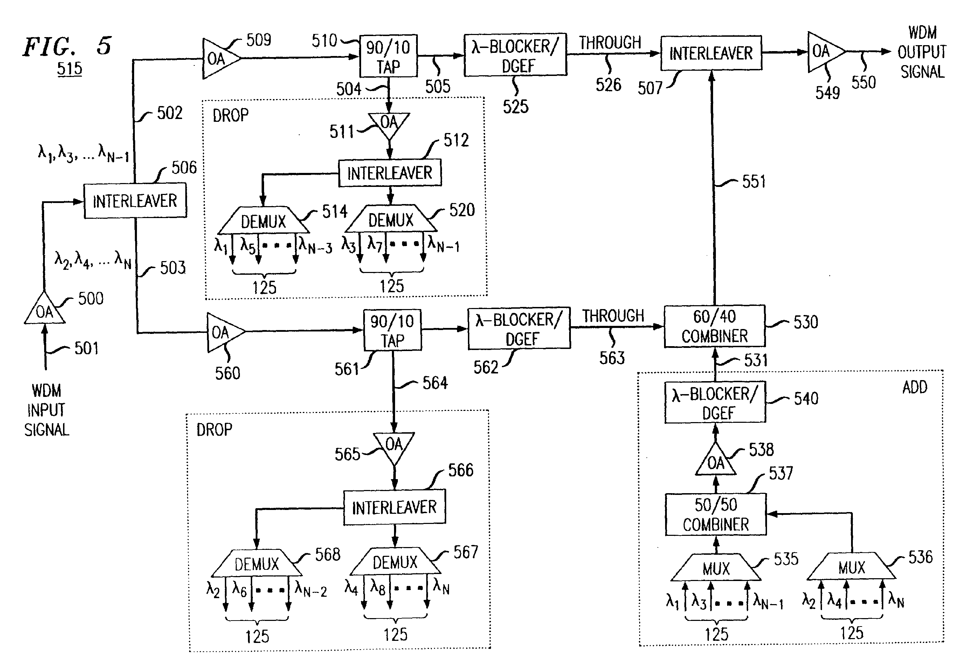

FIG. 5 shows another illustrative embodiment of an add/drop node 515 that provides 100% add/drop capability, optical amplification to compensate for losses, growth capability for add/drop, and interleaving to increase channel spacing between adjacent optical channels. The embodiment shown in FIG. 5 is similar in configuration and in operation to that shown in FIG. 4 with the exception that path 502 is used for dropping optical channels instead of express routing as is done in path 402 in FIG. 4. As such, only the differences between the embodiments shown in FIGS. 4 and 5 will be discussed here for sake of brevity.

As shown, WDM input signal 501 is provided to an optional optical amplifier 500 which boosts the signal power of the optical signal. Again, incorporation of optical amplification is a matter of design choice. Interleaver 506 performs the same function as interleaver 406 from FIG. 4 in that the incoming WDM input signal 501 is de-interleaved into two output streams, optical channels having wavelengths λ₁, λ₃,... λ_{N-1} in path 502 and optical channels having wavelengths λ₂, λ₄,... λ_{N} in path 503. The processing of the optical channels in path 503 via optical amplifier 560, tap 561, wavelength blocker/DGEF 562, through path 563, and combiner 530 is the same as that previously described for the optical channels in path 403 in FIG. 4 and will not be repeated here for sake of brevity. Similarly, optical amplifier 565, interleaver 566. and optical demultiplexers 567-568 perform the same "drop" functions while optical multiplexers 535-536, combiner 537, optical amplifier 538, and wavelength blocker 540 perform the same "add" functions as described for the corresponding components in FIG. 4.

For the optical channels in path 502, optical amplifiers 509 and 511, tap 510, interleaver 512, optical demultiplexers 514 and 520, and wavelength blocker 525 also perform the same "drop" functions as the corresponding components both in path 503 as well as those corresponding components in the embodiment shown in FIG. 4. By including the same drop capability in path 502, any of the optical channels in WDM input signal 501 can now be dropped at node 515. Interleaver 507 is therefore used to interleave or otherwise combine the optical channels from "through" path 526 (e.g., those not dropped via "drop" path 504) with the optical channels combined in path 551 that are supplied from "through" path 563 (e.g., those not dropped via "drop" path 564) and from "add" path 531. The interleaved signal is then amplified by optical amplifier 549 and supplied as WDM output signal 550.

It should be noted that the functions of various elements shown in the drawing can be controlled by processors or controllers that may comprise dedicated hardware or hardware capable of executing software. As used herein, a "processor" or "controller" should not be construed to refer exclusively to hardware capable of executing software, and may implicitly include, without limitation, digital signal processor (DSP) hardware, read-only memory (ROM) for storing software, random access memory (RAM), non-volatile storage and so on.

The foregoing embodiments are merely illustrative of the principles of the invention. Those skilled in the art will be able to devise numerous arrangements, which, although not explicitly shown or described herein, nevertheless embody those principles that are within the scope of the invention. For example, various modifications and substitutions can be made for the specific components and schemes used to add and drop optical channels in the respective "add" and "drop" paths of the illustrated embodiments. Similarly, different components and techniques may be used for splitting and combining signals to increase channel spacing or to address other design issues. Optical amplification requirements will also differ depending on the type of components being used and the configuration of such components. All of these modifications and substitutions will be apparent to those skilled in the art in view of well-known network and system design principles and further in view of the teachings herein and, as such, are contemplated for use according to the principles of the invention. Accordingly, the embodiments shown and described herein are only meant to be illustrative and not limiting in any manner. The scope of the invention is limited only by the claims appended hereto.

## Claims

1. An add/drop node capable of adding or dropping at least one optical channel of a wavelength division multiplexed (WDM) signal, the add/drop node comprising:
an optical coupler for coupling a WDM input signal to both a drop transmission path and a through transmission path within the add/drop node;
an apparatus coupled to the drop transmission path for optically separating the WDM input signal into a plurality of optical channels, wherein one or more of the plurality of optical channels are selectively dropped from the WDM input signal;
a first wavelength blocking element coupled to the through transmission path for selectively blocking the one or more optical channels being selectively dropped from the WDM input signal so that only optical channels not being dropped at the add/drop node are passed on the through transmission path;
in an add transmission path within the add/drop node,
an apparatus for combining a plurality of optical channels to form a WDM add signal, the plurality of optical channels in the WDM add signal having wavelengths corresponding to the wavelengths of the optical channels in the WDM input signal, wherein one or more of the plurality of optical channels in the WDM add signal are to be added at the add/drop node, and
a second wavelength blocking element for selectively blocking the optical channels not being added so that only optical channels being added at the add/drop node are passed along in the add transmission path; and
a combiner coupled to each of the add and through transmission paths for combining the one or more optical channels from the add transmission path with the optical channels in the through transmission path to generate a WDM output signal for transmission from the add/drop node.

2. The add/drop node according to claim **1**, further comprising a controller coupled to and communicating with the first and second wavelength blocking elements, the first and second wavelength blocking elements being dynamically and automatically programmable in response to the controller and as a function of changing add/drop requirements.

3. The add/drop node according to claim **1**, wherein the first and second wavelength blocking elements each comprise a dynamic gain equalizer element for adjusting the gain of optical channels in the through and add transmission paths on a per-channel basis.

4. The add/drop node according to claim **1**, further comprising a first optical interleaver for separating the WDM input signal into at least a first and second group of optical channels according to a prescribed pattern so that optical channels in each of the first and second groups are spaced apart by at least one wavelength within their respective groups.

5. The add/drop node according to claim **4**, wherein the first group of optical channels are routed in an express routing path within the add/drop node such that the optical channels in the first group cannot be dropped at the add/drop node, the add/drop node further comprising a second optical interleaver for combining the optical channels from the express routing path with the optical channels combined from the add and through paths.

6. The add/drop node according to claim **1**, wherein the apparatus for optically separating the WDM input signal comprises one or more optical demultiplexers and the apparatus for combining a plurality of optical channels in the add transmission path comprises one or more optical multiplexers.

7. A method for adding/dropping at least one optical channel of a wavelength division multiplexed (WDM) signal at an add/drop node, the add/drop node including a first transmission path for dropping selected optical channels from the WDM signal, a second transmission path for routing selected optical channels through the add/drop node, and a third transmission path for adding selected optical channels to the WDM signal, the WDM signal having a plurality of optical channels of different wavelengths, the method comprising:
receiving a WDM input signal at the add/drop node;
distributing the WDM input signal to the first and second transmission paths;
dropping one or more optical channels from the WDM input signal in the first transmission path;
adding one or more optical channels to the WDM input signal in the third transmission path;
selectively routing optical channels in each of the second and third transmission paths to provide a reconfigurable add/drop capability by
selectively blocking wavelengths in the second transmission path that correspond to optical channels being dropped from the WDM input signal in the first transmission path, and
selectively passing wavelengths in the third transmission path that correspond to optical channels being added at the add/drop node; and
combining the optical channels from the second and third transmission paths to generate a WDM output signal for transmission from the add/drop node.

8. The method according to claim 7, wherein the steps of selectively blocking and selectively passing are dynamically configurable as a function of changing add/drop requirements.

9. A method for adding/dropping at least one optical channel of a wavelength division multiplexed (WDM) signal at an add/drop node, the add/drop node including a first transmission path for dropping selected optical channels from the WDM signal, a second transmission path for routing selected optical channels through the add/drop node, and a third transmission path for adding selected optical channels to the WDM signal, the WDM signal having a plurality of optical channels of different wavelengths, the method comprising:
receiving a WDM input signal at the add/drop node;
distributing the WDM input signal to the first and second transmission paths;
dropping one or more optical channels from the WDM input signal in the first transmission path;
adding one or more optical channels to the WDM input signal in the third transmission path;
selectively routing optical channels in each of the second and third transmission paths to provide a reconfigurable add/drop capability by
selectively blocking wavelengths in the second transmission path that correspond to optical channels being added to the WDM input signal in the third transmission path, and
selectively passing wavelengths in the third transmission path that correspond to optical channels being added at the add/drop node; and
combining the optical channels from the second and third transmission paths to generate a WDM output signal for transmission from the add/drop node.

10. The method according to claim **9**, wherein the steps of selectively blocking and selectively passing are dynamically configurable as a function of changing add/drop requirements.
